(19) Europäisches Patentamt
European Patent Office
Office européen des brevets

(11) **EP 2 581 710 A2**

(12) **EUROPEAN PATENT APPLICATION**

(43) Date of publication:
**17.04.2013 Bulletin 2013/16**

(51) Int Cl.:
**G01D 5/245** (2006.01)  **G01D 5/36** (2006.01)

(21) Application number: **12187898.7**

(22) Date of filing: **10.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.10.2011 JP 2011224689**

(71) Applicant: **Canon Kabushiki Kaisha**
**Tokyo 146-8501 (JP)**

(72) Inventor: **Takahama, Shinichiro**
**Tokyo 146-8501 (JP)**

(74) Representative: **TBK**
**Bavariaring 4-6**
**80336 München (DE)**

(54) **Encoder system, machine tool, and transfer apparatus**

(57)     An encoder system (100) includes a supporting member (11) including a plurality of marks, first and second sensors (12, 13) provided to be shifted by a first distance from each other and capable of reading the marks, and a calculation processing unit (14) that performs a calculation processing of detected signals of the first and second sensors, and the calculation processing unit calculates a first time that is required for one mark to move the first distance and a second time that is required for two adjacent marks to pass a detection position of the first or second sensor while the supporting member moves relatively to the first and second sensors, and determines that a mark pattern used to calculate a first index is an origin mark pattern when the first index calculated based on the first and second times corresponds to a second index characterizing an origin position.

FIG. 1

EP 2 581 710 A2

## Description

BACKGROUND OF THE INVENTION

Field of the Invention

The present invention relates to an encoder system that has a function of detecting an origin position.

Description of the Related Art

An encoder system commonly performs an initializing process to determine a specific position after the power is turned on. Japanese Patent Laid-Open No. 5-296797 discloses an encoder system which sets a position where light emitted from a light source transmits through a predetermined slit portion to be detected by a light receiving element as a reference position of the encoder. Japanese Patent Laid-Open No. H10-318790 and Japanese Patent Laid-Open No. 2008-076284 disclose an encoder system which uses a supporting member for both of the measurement (for the encoder) and the detection of the origin position and forms an origin mark pattern on a part of the supporting member so as to detect an origin position using a sensor for the encoder.

However, in the methods disclosed in Japanese Patent Laid-Open No. 5-296797 and Japanese Patent Laid-Open No. H10-318790, an amplitude change is generated by the alignment of an object to be measured, dust, scratch, or dirt of a surface, similarly to the origin mark, and therefore the reliability lacks due to the deterioration of the detection accuracy of the origin position or the influence of false detection. In a configuration where the mark itself is fabricated or the like so as to change signal intensity, the number of parts is increased and also the cost is increased. In the configuration disclosed in Japanese Patent Laid-Open No. 2008-076284, a missing lattice is provided in the supporting member with a main mark, and therefore a new part is not needed to detect the origin position. However, similarly to other conventional methods, the deterioration of the detection accuracy of the origin position or the false detection is caused by the amplitude change due to the dust, the scratch, or the dirt of the surface.

SUMMARY OF THE INVENTION

The present invention provides an encoder system with high reliability that improves detection accuracy of an origin position.

The present invention in its first aspect provides an encoder system as specified in claims 1 to 7.

The present invention in its second aspect provides a machine tool as specified in claim 8.

The present invention in its third aspect provides a transfer apparatus as specified in claim 9.

Further features and aspects of the present invention will become apparent from the following description of exemplary embodiments with reference to the attached drawings.

BRIEF DESCRIPTION OF THE DRAWINGS

FIG. 1 is a schematic configuration diagram of an encoder system in each of embodiments.
FIG. 2 is a waveform diagram of an output signal of two sensors in each of the embodiments.
FIG. 3 is a schematic diagram of a copier to which an encoder system in Embodiment 1 is applied.
FIGs. 4A to 4D are examples of a mark that includes an origin mark pattern in Embodiment 1.
FIG. 5 is a flowchart of illustrating an origin detection process of the encoder system in Embodiment 1.
FIG. 6 is a profile of a mark pitch error index near an origin position in Embodiment 1.
FIG. 7 is a diagram of describing origin position detection during deceleration in Embodiment 1.
FIG. 8 is a plot diagram of velocity during deceleration in Embodiment 1.
FIG. 9 is a flowchart of illustrating an origin position update process of the encoder system in Embodiment 1.
FIG. 10 is a flowchart of illustrating an origin characteristic extraction process of an encoder system in Embodiment 2.
FIG. 11 is a graph of illustrating a waveform correlation between a characteristic pattern extracted in a first cycle and a signal in a second cycle in Embodiment 2.

DESCRIPTION OF THE EMBODIMENTS

Exemplary embodiments of the present invention will be described below with reference to the accompanied drawings. In each of the drawings, the same elements will be denoted by the same reference numerals and the duplicate descriptions thereof will be omitted.

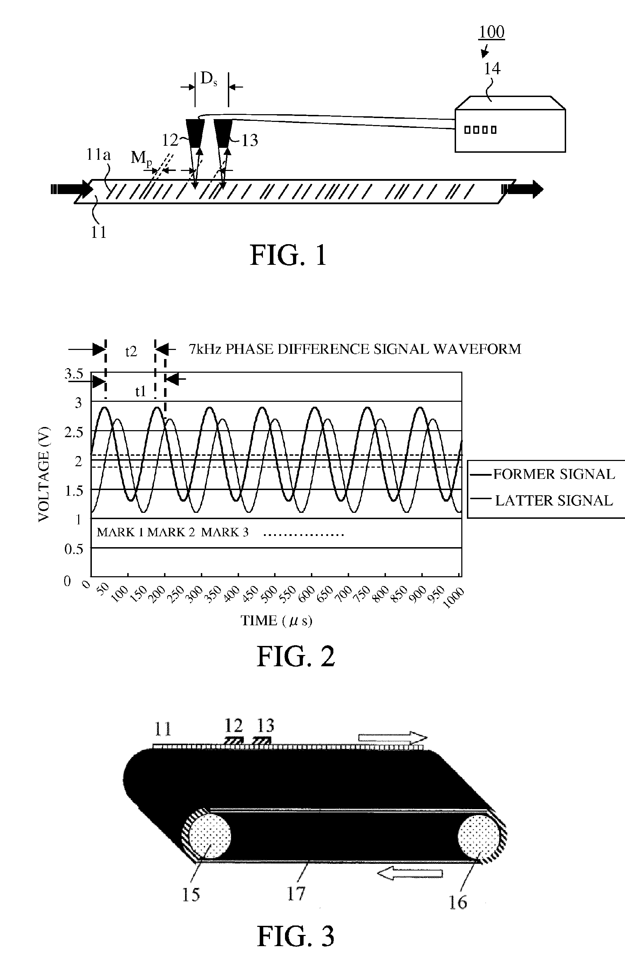

First of all, referring to FIG. 1, an encoder system (a displacement detection apparatus) in the present embodiment will be described. FIG. 1 is a schematic configuration diagram of an encoder system 100 in the present embodiment. The encoder system 100 is configured by including a supporting member 11 that includes a plurality of marks 11a, sensors 12 and 13 that read the marks 11a, and a calculation processing unit 14 that performs calculation processings of output signals (detected signals) of the sensors 12 and 13. The sensor 12 (a first sensor) and the sensor 13 (a second sensor) are provided so as to be shifted from each other by a first distance (a sensor distance $D_s$) in a moving direction of the supporting member 11, which are configured to be capable of reading the plurality of marks 11a.

The supporting member 11 is, for example, constituted of polyester resin that has a thickness of 50 micrometers ($\mu$m). On a surface layer of the supporting member 11, an aluminum thin film or the like is formed to reflect light. The mark 11a is formed by removing a part of the aluminum thin film on the surface layer using a laser ablation or the like. Each of the sensors 12 and 13 is configured by including a light source (a light emitting element) such as a point source LED or a semiconductor laser (not shown) and a light receiving element that has a photodiode array receiving reflected light from the supporting member 11.

The present embodiment performs a photoelectric conversion to amplify the change of reflected light intensity of a divergent light beam on the marks 11a emitted from the point source LED without using a lens, and detects a rising edge or a falling edge to measure a transit time of the marks 11a. However, the present embodiment is not limited to this, and the transit time of the marks 11a may also be measured by using another method. The first distance (the sensor distance $D_s$) between the sensor 12 and the sensor 13 can be arbitrarily set. It is preferred that a moving time between the sensors for the same mark and a moving time of the same sensor between adjacent marks be measured at the same time. In the encoder system 100 of the present embodiment, it is configured so that the sensor distance $D_s$ are equal to a mark distance $M_p$ (a distance between the marks).

A method of measuring the mark distance $M_p$ in the present embodiment uses the sensor distance $D_s$ as a reference, and therefore it is preferred that the sensors 12 and 13 be arranged with high accuracy. It may be applied unless a purpose is to detect a relative displacement of the mark distance $M_p$. The light source (the light emitting element) and each of the sensors 12 and 13 (the light receiving element) are not necessarily provided at the same region (or positions close to each other), and they may also be provided at positions distant from each other if they are optically in a permissible range. Since the present embodiment can obtain the same effect even when being applied to an imaging optical system, an optical configuration, an arrangement, a light source, a material of a moving object, and the like in the encoder system 100 are not limited.

In the present embodiment, the marks 11a are formed by directly fabricating the supporting member 11, but the embodiment is not limited to this and it may also formed by applying a previously-fabricated thin film to the supporting member 11. The marks 11a are, for example, formed by performing a surface fabrication using the laser ablation, etching process, or an application by a photoengraving or a printing, but the mark forming method is not limited to these methods.

As illustrated in FIG. 1, the encoder system 100 of the present embodiment is configured so that the sensors 12 and 13 measure the reflected light from the supporting member 11 (the marks 11a), but it is not limited to this. Alternatively, a sensor which measures transmitted light of the supporting member 11 (the marks 11a) may also be used, and in this case, the supporting member 11 is disposed between the light emitting element and the light receiving element. The encoder system 100 of the present embodiment is an optical encoder, but it is not limited to this. The present embodiment can also be applied to an encoder which uses a vibrational wave such as an ultrasonic wave or a magnetic encoder. The moving object may be attached to any one of sides of the supporting member 11 and a substrate mounting the sensors, and at least one of the moving object and the sensor only needs to relatively move with respect to the other.

Subsequently, referring to FIG. 2, a signal processing method of the encoder system 100 will be described. FIG. 2 is a waveform diagram of output signals of the sensors 12 and 13, and a vertical axis indicates a voltage value (V) and a horizontal axis indicates a time ($\mu$s). In FIG. 2, a former signal (a bold line) indicates the output signal of the sensor 12, and a latter signal (a thin line) indicates the output signal of the sensor 13. Each of the sensors 12 and 13 of the present embodiment may also be configured by separately including a sensor for performing the encoder measurement and a sensor for calibrating the distance between the marks. In the present embodiment, both the encoder measurement and the calibration of the distance between the marks are performed by a set of sensors (the sensors 12 and 13).

The sensors 12 and 13 can simultaneously perform the following two measurements (a first measurement and a second measurement). In the first measurement, a first time in which one mark (the same mark) of the plurality of marks 11a passes between the sensors 12 and 13 (a time required for moving the first distance) while the supporting member 11 relatively moves with respect to the sensors 12 and 13 is measured. In the second measurement, a second time that is required for the two adjacent marks of the plurality of marks 11a to pass a detection position by any one of the sensors 12 and 13 (the same sensor) while the supporting member 11 relatively moves with respect to the sensors 12 and 13 in sequence. The first time and the second time are calculated by the calculation processing unit 14 based on the detected signals of the sensors 12 and 13. As described below, the calculation processing unit 14 calculates a first index based on the first time and the second time. Then, the calculation processing unit 14 determines that a mark pattern that is used to calculate the first index is an origin mark pattern when the first index corresponds to a second index that characterizes the origin position.

Symbol $t_1$ in FIG. 2 indicates the first time that is measured by a first measuring method, and symbol $t_2$ indicates the second time that is measured by a second measuring method. With regard to the two output signals illustrated in FIG. 2, the output signal of the sensor 12 that primarily detects the same mark is indicated by the bold line as a former signal, and the output signal of the sensor 13 that subsequently detects the mark is indicated by the thin line as a latter signal. These output signals are signals that pass the marks 11a formed at intervals of 85 micrometers ($\mu$m) at a speed of 143 microseconds

(μs).

Hereinafter, in the present embodiment, the first measuring method and the second measuring method are defined as an interval detecting method and an encoder method, respectively. The interval detecting method needs a plurality of sensors and also needs mark counters that are provided separately for each of the sensors so that each of the sensors recognizes the same mark and a counter value for the same mark matches for each of the sensors. In this method, a time difference that is specified by the sensor distance $D_s$ is measured even when the mark distance $M_p$ is varied and the accuracy of the mark interval is undesirable. Therefore, it can reduce a measurement error that depends on the variation of the mark distance $M_p$. On the other hand, since the encoder method sequentially reads the marks by a signal sensor, the variation of the mark distance $M_p$ is directly reflected in the measurement error of the time difference. Therefore, the accuracy at the time of manufacturing the marks is an important factor.

Next, a method of detecting an origin position of the encoder system 100 that calculates the mark distance $M_p$ or an error value of the mark distance $M_p$ using the interval detecting method and the encoder method in the present embodiment so as to specify the origin position will be described.

The mark distance $M_p$ changes in accordance with a method of manufacturing the mark or a surrounding environment (temperature, humidity, tension applied to the supporting member). As described above, the encoder system 100 of the present embodiment combines the interval detecting method with the encoder method so that the index (the first index) depending on the mark distance $M_p$ can be sequentially calculated for each mark interval. Therefore, the mark distance $M_p$ at a specific position can be detected based on the first index. In the present embodiment, the first index means that a ratio of the first time $t_1$ calculated by the interval detecting method and the second time $t_2$ calculated by the encoder method, i.e. the mark distance $M_p$ / the sensor distance $D_s$. Instead of this, as a first index, a product of the first distance (the sensor distance $D_s$) and the ratio of the first time $t_1$ and the second time $t_2$ can also be adopted. Alternatively, the error value $D_s \cdot (t_2/t_1 - t_0)$ may also be adopted.

When the first index and the array of the first indexes that are listed in time sequence indicate a specific value (a second index that characterizes the origin position) and a specific array respectively, it is assumed that the origin position is detected and therefore the origin position is determined. In other words, the calculation processing unit 14 determines that the mark pattern used for the calculation of the first index is the origin mark pattern when the first index corresponds to the second index. A position of a time at which the match of the pattern is determined may also be defined as an origin position, or alternatively a position of a time at which some marks are passed after the match of the pattern is determined may also be defined as an origin position. Thus, the origin position can be arbitrarily selected.

The pattern that is the index (the second index) characterizing the origin (the origin position) is, for example, previously stored in a storage portion that is provided inside the calculation processing unit 14. The supporting member 11 of the encoder system 100 is manufactured so that the mark pattern of the origin position (the origin mark pattern) corresponds to the pattern that is the second index. The origin mark pattern is a pattern that is different from a normal mark pattern, and the mark intervals are different from each other. Instead of previously storing the origin mark pattern in the storage portion, the array of the mark distance $M_p$ characterized at an arbitrary position (an arbitrary pattern that includes a pattern different from the normal mark pattern) may also be stored as an origin mark pattern. In this case, the supporting member 11 is manufactured without previously determining the origin mark pattern, and the array and the position of the origin mark pattern (the second index) are determined by an actual measurement. Since the mark distance $M_p$ can be corrected by using the sensor distance $D_s$, the detection accuracy of the origin position can also be easily improved by correcting the detected value at the origin position.

Hereinafter, in Embodiment 1, a case where the array pattern for detecting the origin position is previously determined will be described. Furthermore, in Embodiment 2, a case where an arbitrary array is stored and the stored array is set as a characteristic pattern of the origin will be described.

[EMBODIMENT 1]

An encoder system in Embodiment 1 of the present invention will be described. FIG. 3 is a schematic diagram of a copier to which the encoder system of the present embodiment is applied. In the present embodiment, each of the two sensors 12 and 13 having the sensor distance $D_s$ of 85 micrometers (μm) is disposed at a distance of 3mm from the supporting member 11. The supporting member 11 is a film on which marks having the mark distance $M_p$ of 85 micrometers is formed by a laser processing.

As illustrated in FIG. 3, the supporting member 11 is fixed on an intermediate transfer belt 17, which is provided in order to measure a surface velocity during driving the belt (during the movement from the left side to the right side in FIG. 3). A drive roller 15 moves at a constant angular velocity so as to drive the intermediate transfer belt 17 to be a circumferential velocity of 320mm/s as a target. Actually, however, the surface velocity of the intermediate transfer belt 17 is unstable because of the influence of the unevenness of the thickness or the decentering of the drive roller 15 or the like. Therefore, the copier causes a color shift during the transfer. Reference numeral 16 denotes a driven roller that is driven in accordance with the intermediate transfer belt 17.

Reference numerals 12 and 13 denote a sensor that generates a former signal (a first sensor) and a sensor that generates a latter signal (a second sensor), respectively.

In order to reduce this color shift, the present embodiment learns a profile of the unevenness of the thickness of the intermediate transfer belt 17 for one cycle so as to perform a control of reducing the color shift, and therefore the signal (an origin signal) at a home position (the origin position) of the intermediate transfer belt 17 is outputted. According to the present embodiment, an encoder system that is capable of generating an origin signal with high reproducibility can be provided without newly providing parts or devices for detecting the origin position.

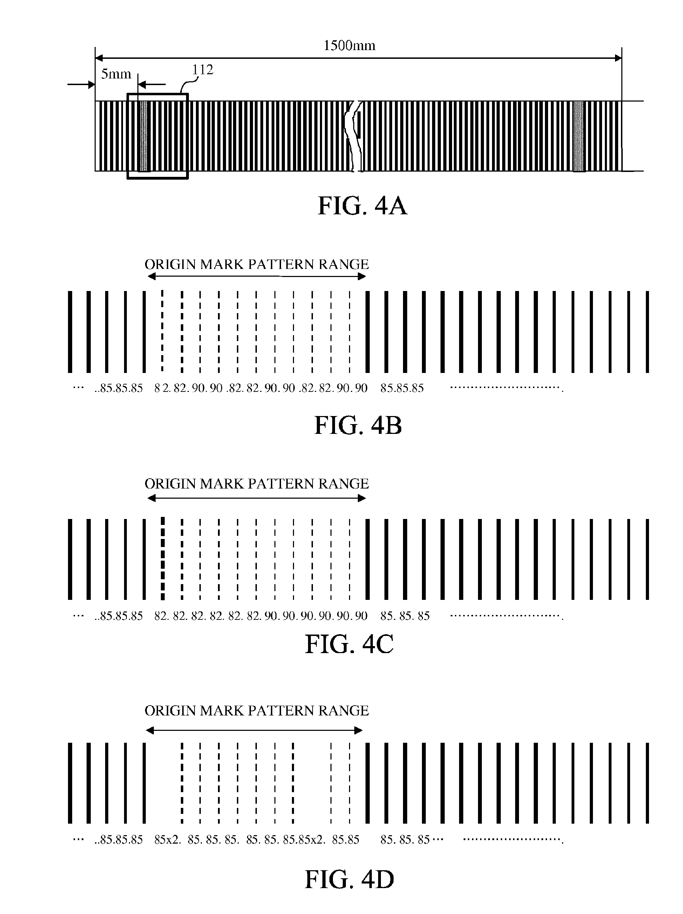

FIGs. 4A to 4D are examples of the marks that include the pattern of an identification index of the origin position (the origin mark pattern) in the present embodiment. FIG. 4A is a diagram of illustrating whole of the supporting member 11, and FIGs. 4B to 4D are peripheral enlarged diagrams in a range of the origin mark pattern (enlarged diagrams of a region 112). As illustrated in FIG. 4A, the position of the origin mark pattern of the present embodiment is located at a position of 5mm from an edge side of a whole circumference of 1500mm, but the present embodiment is not limited to this. The origin may also be provided at any regions on the supporting member 11. In addition, a width of the origin mark pattern can be arbitrarily set.

As illustrated in FIGs. 4B to 4D, the mark pattern other than the range of the origin mark pattern is formed with a width (a pitch) of 85 micrometers. Furthermore, a pattern having a width of 82 micrometers and a pattern having a width of 90 micrometers are arranged in the range of the origin mark pattern, which are designed so that a ratio of the mark distance $M_p$ with respect to the sensor distance $D_s$ ($M_p/D_s$) changes in a predetermined range in accordance with the moving direction.

In the example of FIG. 4B, the origin mark pattern alternately varies in widths of 82, 82, 90, 90, 82, 82, ... micrometers, and the ratio $M_p/D_s$ changes between 0.96 and 1.06. In the example of FIG. 4C, the origin mark pattern is configured so as to vary at continuously six-pitch cycles in the transition of the origin mark pattern having widths of 82 to 90 micrometers. When the signal is amplified by a sum signal of an array sensor including six sensors, the origin mark pattern illustrated in FIG. 4C is ideal, and the ratio $M_p/D_s$ gently changes between 0.96 and 1.06. In the example of FIG. 4D, instead of being newly embedded with the origin mark pattern, a part of the mark pattern having the common width of 85 micrometers is missing so as to replace the origin mark pattern. A change rate of the ratio $M_p/D_s$ increases compared to the case of FIGs. 4B and 4C. However, it is preferred that the process be performed using an average value of the sensor array including a plurality of sensors since the signal itself is missing when the detection is performed by using a single sensor.

As illustrated in FIGs. 4B and 4C, the origin mark pattern that generates an alternate and regular pitch variation is adopted to be able to further reduce the error detection caused by the dirt or the scratch of the supporting member 11 and also to obtain a more precise origin signal. In other words, in the method of changing missing lattices, transmittance, or reflectance so as to detect the variation of the signal amplitude caused by the change, the error detection may occur due to the adhesion of the dust or the generation of the scratch. In the present embodiment, the mark pattern in which a pattern interval is modulated is detected. Then, the mark pattern is detected by using the result normalized by the velocity by the interval detecting method as well as using the time measurement by the encoder method so as to be able to precisely detect the origin mark pattern even when the velocity variation occurs due to the unevenness of the thickness of the belt or the decentering of the drive roller. In addition, even when the pitch of the origin mark pattern is changed due to the dust or the scratch, the influence can be reduced by widening the array of the mark pitch that determines the characteristics. When the width (the pitch) of the origin mark is changed, the influence of the deterioration of the reading accuracy caused by the dust or the scratch can be further reduced by updating the characteristic pattern of the origin pattern so as to be adapted to the change with the passage of time. As a result, in an encoder which is used for the velocity control of the intermediate transfer belt of the copier, a false recognition in detecting the origin position caused by the scratch or the dust by toner that is a transfer medium, a drive roller, or a drum can be avoided.

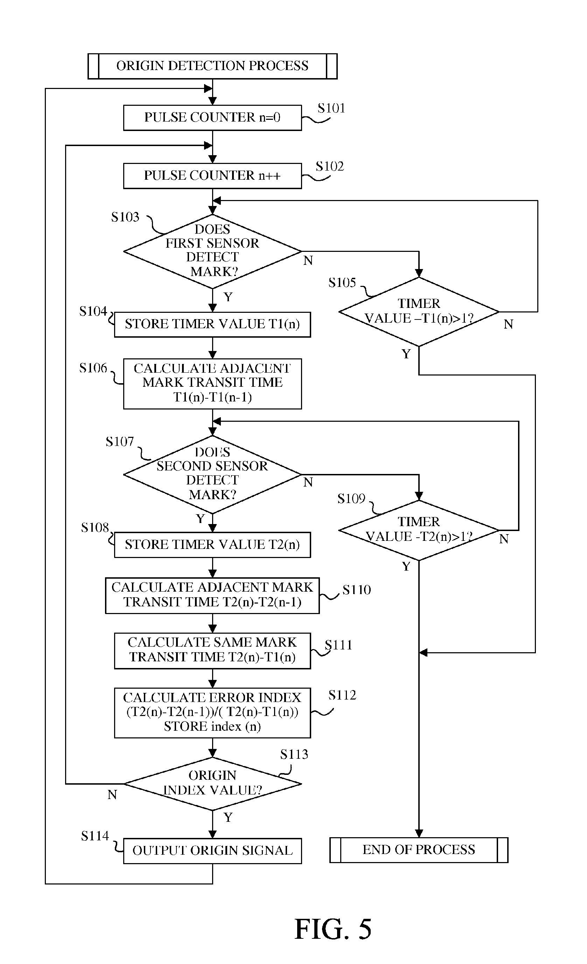

Next, referring to FIG. 5, an origin detection process in the encoder system of the present embodiment will be described. FIG. 5 is a flowchart of illustrating an origin detection method. The origin detection method of the present embodiment uses two sensors (the first sensor and the second sensor) each of which performing a pulse count so as to store a detection timing of the mark. Each step in FIG. 5 is performed based on a command of the calculation processing unit 14.

First of all, in Step S101, a pulse counter is initialized (n=0), and it is set to be able to perform the numbering of the pulse. Subsequently, in Step S102, the pulse counter counts up (n++). Then, in Step S103, it is determined whether the first sensor detects the mark. When the first sensor detects the mark, in Step S104, a current timer value T is stored as a value T1 (n) in the storage portion. On the other hand, when the first sensor does not detect the mark, in Step S105, it is determined whether the difference (T-T1(n)) between the current timer value T and the value T1(n) stored in the storage portion is greater than 1. When this difference is less than 1, the flow returns to Step S103. On the other hand, when this difference is not less than 1, the flow of FIG. 5 is finished. In other words, when the timer value is not updated in a predetermined time, the origin detection process is finished.

In Step S106, when the previously stored value T1(n-1) exists, an adjacent mark transit time (T1(n)-T1(n-1)) is calculated. In Steps S107, S108, S109, and S110, processes similar to Step S103, S104, S105, and S106 respectively for the first sensor are performed for the second sensor.

After the adjacent mark transit time (T2(n)-T2(n-1)) is calculated in Step S110, the same mark transit time T2(n)-T1(n) is calculated in Step S111. Then, in Step S112, a time ratio ((T2(n)-T2(n-1))/(T2(n)-T1(n))) that is an error index is calculated, and the calculation result ($M_p/D_s$) is stored as Index(n) in the storage portion.

Subsequently, in Step S113, the index value of the origin (an origin index value) which is the previously stored value is compared to the value Index(n). When these values are equal to each other, in Step S114, the origin signal is outputted and the flow returns to the initializing process of the pulse counter (Step S101). On the other hand, when these values are not equal to each other, the flow returns to the count up process of the pulse counter (Step S102). The origin detection process of the present embodiment is performed by a reflection-type encoder in which the sensors 12 and 13 (the first sensor and the second sensor) is disposed at the same side as the light source with respect to the supporting member 11, but the origin detection process can also be performed by a transmission-type encoder.

In the embodiment, it is considered that a normal range in which the mark interval of the supporting member 11 is 85$\mu$m and an origin range in which the mark intervals of the origin mark pattern are 82$\mu$m and 90$\mu$m sequentially pass in accordance with the movement of the belt. As an origin pattern, the mark pattern of FIG. 4B that has the normal range in which the mark distance is 85$\mu$m and the origin range in which the mark distances are 82, 82, 90, 90, 82, 82, 90, 90, 82, 82, 90, and 90 is used. The belt is assumed to move at a constant velocity of 320mm/s. In the normal range, the mark transit time measured by the interval detecting method is 265$\mu$s, the mark transit time measured by the encoder method is 265$\mu$s, and the mark distance $M_p$ / the sensor distance $D_s$ is 1. On the other hand, in the origin range, the mark transit time measured by the interval detecting method is 265$\mu$s, and the mark transit times measured by the encoder method are 256$\mu$s and 281$\mu$s when the mark distances are 82$\mu$m and 90$\mu$m, respectively. In addition, the values of the mark distance $M_p$ / the sensor distance $D_s$ are 0.96 and 1.06, respectively. In other words, the values of the mark distance $M_p$ / the sensor distance $D_s$ that represent 1 in the normal range sequentially represent the values of 0.96, 1.06, and 0.96.

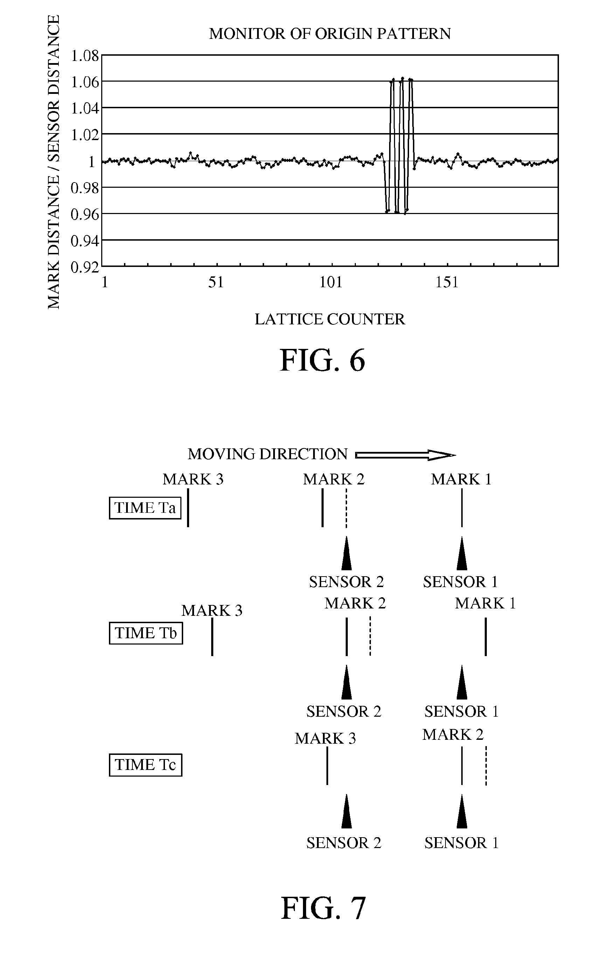

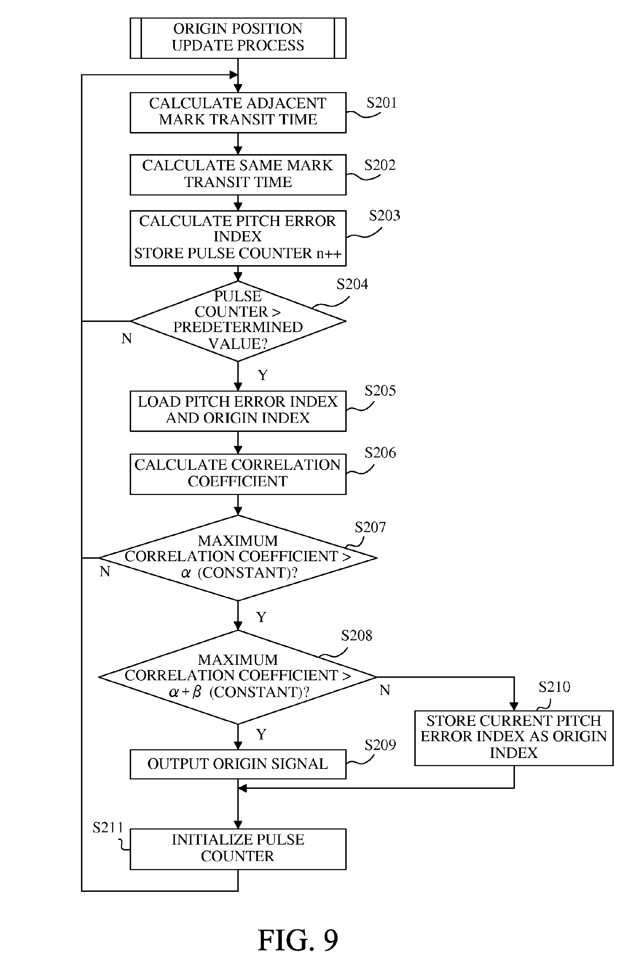

FIG. 6 is a profile of a mark pitch error index near the origin position in the present embodiment, which illustrates a result of monitoring the mark distance / the sensor distance ($M_p/D_s$) when passing the origin mark pattern. Also in the actual data, roughly, the origin mark pattern that corresponds to the assumed mark interval is illustrated, and a lattice counter which has the best correlation with the assumed mark pattern can be specified as the origin position. The pitch error of the actual mark pattern can also be updated by an origin position update process that will be described below with reference to FIG. 9.

The total length of the origin mark pattern described above is not an integral multiple of 85$\mu$m that is the mark distance $M_p$ of the normal mark pattern. Therefore, in the normal range of 85$\mu$m that is around the origin mark pattern, a phase is shifted. Accordingly, it is preferred that a phase shift be not generated in the normal range that is provided around the origin mark pattern, i.e. the total length of the origin mark pattern be set to an integral multiple of the mark distance $M_p$ of the normal mark pattern. As a result, in the normal range, the same mark state and detected signal state are maintained with or without the origin mark pattern.

Although the present embodiment assumes the origin detection at a constant velocity, the present embodiment can also be applied to the origin detection during acceleration and deceleration, which will be described with reference to FIG. 7. FIG. 7 is a diagram of describing the origin detection during the deceleration. As illustrated in FIG. 7, a belt which accelerates and decelerates in the mark pitch is assumed. Time Ta to Time Tc is a transit time of adjacent marks (Mark 1 and Mark 2), and Time Tb to Time Tc is a transit time of the same mark (Mark 2). At Time Tb, it is considered that an average velocity is reduced from 325mm/s to 320mm/s.

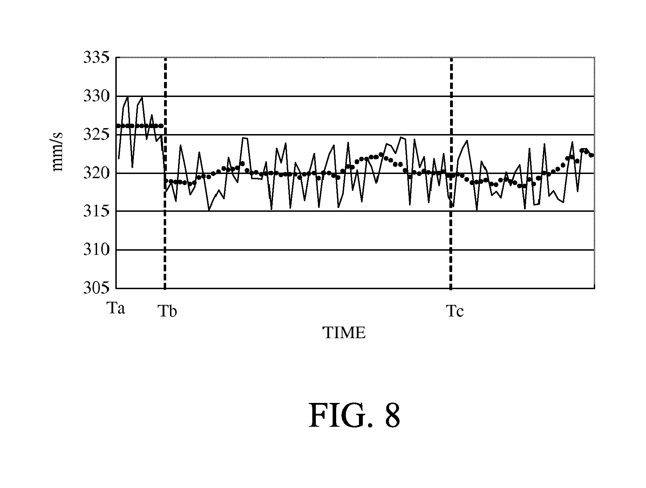

FIG. 8 is a plot diagram of the velocity during the deceleration in the present embodiment. FIG. 8 is a record of the interval velocity variation in the process, and a solid line in the graph illustrates an actual velocity and a dotted line illustrates an interval average velocity. When the sensor distance $D_s$ is equal to the mark distance $M_p$, a time that is required for one mark to pass between two sensors is equal to a time that is required for two adjacent marks to pass one sensor. Setting this time to t0, the transit time between the marks is longer by a time $\delta t$ when the mark distance $M_p$ is wide. This is because the distance between the marks is extended by a distance $\delta d$ as an error. The time t0 is represented as Tc-Tb, and the time $\delta t$ is represented as Tb-Ta.

When the interval average velocity at which one sensor passes a sensor distance d (a distance between the two sensors) is v0, the time t0 is represented as the following Expression (1-1).

$$t0=d/v0 \ \dots \ (1\text{-}1)$$

When the average velocity at which one sensor passes the two adjacent mark distance d+$\delta$d is v0 in the interval of the sensor distance d and is v1 in the interval of the distance $\delta$d, the time $\delta t$ is represented as the following Expression (1-2).

$$\delta t = \delta d/v1 \ ... \ (1-2)$$

The value of the mark distance / the sensor distance is, compared to the value of the mark time /the sensor time, represented as the following Expression (1-3).

$$t0+\delta t/t0=1+\delta d/d \cdot v0/v1 \ ... \ (1-3)$$

In Expression (1-3), when the value of v0/v1 is near 1, it means that the mark pitch can be identified.

The maximum value of a shaping error of the mark distance can be read as 0.01 with reference to FIG. 6. Therefore, as the example described above, when the pattern having a pitch of 82μm or 90μm is formed as an origin mark pattern on the supporting member 11 that is assumed to have the pitch of 85μm, the absolute minimum value of δd/d is 0.024. The absolute minimum value of δd/d is 0.017 even when the velocity variation is generated by 30%, which means that it can be detected considering the origin detection in which 0.015 is set to a threshold value. The belt of the copier is mainly controlled in a constant velocity range, and therefore it is in a permissible range even when an unexpected variation of 30% at a maximum is assumed. Therefore, the origin detection accuracy in the present embodiment is extremely accurate, and also the reliability is high. Commonly, the average velocity of the mark interval is precise since the interval detecting method is used, and an origin pattern detection that suppresses the influence of the velocity change can be performed since the origin pattern is detected by performing the conversion to the mark distance at the precise velocity. As described above, even when the velocity variation corresponding to the mark transit cycle is generated, a method of performing the origin detection based on a profile that is obtained by calculating an error of the mark pitch using the interval average time of the sensor can maintain a sufficient origin detection performance.

Next, a process method in a case where it is assumed that the origin pattern is changed by the passage of time or the influence of the dust or the scratch will be described. First of all, in the drive system apparatus, the change of the mark interval of the supporting member is generated by the environmental change. It is also caused by the temperature, the humidity, the tension applied to the supporting member, the damage or the dirt by a contact member, or the change with the passage of time by the accumulation of liquid or solid particles such as ink or toner. Conventionally, as a measure against the environmental change of the supporting member, a brush or wipe function was used to remove the dust so as to try to restore the function of the supporting member, but it was just a life support of the part.

Hereinafter, referring to FIG. 9, the process of the present embodiment in a case where the origin pattern is changed by the dust or the scratch will be described. FIG. 9 is a flowchart of illustrating an update process of the origin position of the encoder system in the present embodiment. In the embodiment, a process of performing an automatic tuning that updates a reference origin pattern so as to detect a new origin pattern in performing the next origin detection is adopted. Each step of FIG. 9 is performed based on a command of the calculation processing unit 14.

First of all, in Step S201, the mark is detected so as to calculate the time from the previous adjacent mark to the current mark. Subsequently, in Step S202, the transit time of the same mark is calculated. In this time, in Step S203, a ratio of the transit time of the adjacent mark with respect to the latest time required for the current mark to pass between the two sensors is obtained so as to store the value of this ratio as a pitch error index in the memory (the storage portion). In addition, the pulse counter counts up (n++).

Subsequently, in Step S204, it is determined whether a repeat count of the process from Step S201 to Step S203 is greater than a predetermined threshold value, i.e. the value of the pulse counter is greater than a predetermined value. When the value of the pulse counter is not greater than the predetermined value, the flow returns to Step S201. On the other hand, when the value of the pulse counter is greater than the predetermined value, in Step S205, the pitch error index is loaded from the memory (the storage portion) to a register. In addition, an origin index previously stored in another memory region is loaded. Then, in Step S206, the pitch error index is compared to the origin index, and a correlation coefficient is calculated.

In Step S207, it is determined whether the maximum correlation coefficient (a cross-correlation degree) of the pitch error index and the origin index is greater than a predetermined value α (a constant). When the maximum correlation coefficient is not greater than the predetermined value α, the flow returns to Step S201. On the other hand, when the maximum correlation coefficient is greater than the predetermined value α, in Step S208, it is determined whether the maximum correlation coefficient is greater than an extreme value α+β (a constant). When the maximum correlation coefficient is greater than the extreme value α+β, this value is recognized as the origin pattern, and in Step S209, an origin signal is outputted. On the other hand, when the maximum correlation coefficient is not greater than the extreme value α+β, in Step S210, the current pitch error index is stored as a new origin pattern (an origin index) in the memory. Subsequently, in Step S211, the pulse counter is initialized and the flow returns to Step S201.

According to this update process of the origin position, even when the pitch error index is changed by the adhesion of the dust or the generation of the scratch near the origin pattern, it is possible to prevent the influence even if the dust or the scratch is subsequently generated on the mart of the supporting member since this is used as a comparative criterion next time. In the present embodiment, the mark distance or the cycle of the origin mark pattern is not limited. However, it is preferred that the difference between the sensor distance and the mark distance be within 5% in order to sufficiently maintain the signal amplitude in the nature as an encoder. Furthermore, it is necessary to apply an error pattern that is greater than the variation of the mark pitch other than the origin range of the supporting member in order to maintain the identification accuracy of the origin. Therefore, it is preferred that the sorting of the margin be performed in accordance with the situation of the dirt or the scratch of the mounted system.

[EMBODIMENT 2]

Next, an encoder system in Embodiment 2 of the present invention will be described. The present embodiment, similarly to Embodiment 1, learns a profile of the unevenness of the thickness of the intermediate transfer belt for one cycle in order to prevent the color shift of a copier and outputs an origin signal of the belt so as to perform a control of reducing the influence. The present embodiment, however, does not have a pattern which characterizes the origin position as illustrated in FIGs. 4A to 4D, and is capable of arbitrarily determining an origin range of the mark pitches in a normal range of the supporting member. Thus, in the present embodiment, a configuration of arbitrarily determining the origin range will be described.

For example, on the assumption that the variation of the mark distance around $85 \pm 3$ micrometers is contained at the time of manufacturing the supporting member, when an error array of the mark distance is defined by increasing the number of the marks, it can be characterized as a unique pattern in one cycle. For example, on the assumption that six sequential mark distances are 85, 83, 84, 83, 88, and 87 in a certain specific range, when this pitch array is not indicated in other six sequential lattices, this specific range can be characterized as an origin mark pattern. Instead of previously defining the origin mark pattern, an origin mark pattern determining portion and an origin mark pattern storage portion that select and store the origin mark pattern at the time of initial operation are provided. In other words, when the present embodiment is applied to the copier, the power is turned on and then the intermediate transfer belt is rotated during the warm-up operation so as to perform a scanning of the mark portion of the supporting member using a sensor. Then, the mark pitch error index is taken for one cycle and the unique range is specified so as to analyze the optimum solution of the characteristics of the origin mark pattern.

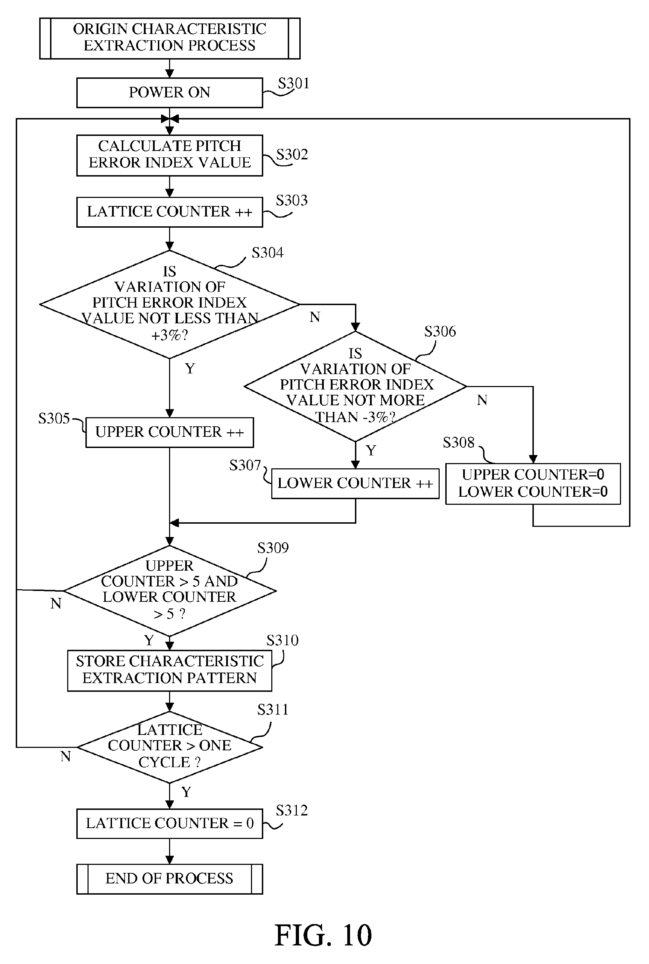

FIG. 10 is a flowchart of illustrating an origin characteristic extraction process of the encoder system in the present embodiment. Each step of FIG. 10 is performed based on a command of the calculation processing unit 14.

First of all, when the power is turned on in Step S301, the intermediate transfer belt starts the drive. Then, in Step S302, the mark pitch error index is monitored to perform the calculation. For example, a condition of the characteristic extraction is that the number of ranges where the error from the mark distance of $85\mu$m exceeds $3\mu$m is not less than a certain number within the range of the assumed origin pattern. Alternatively, a condition in which both the upper value ($88\mu$m) and the lower value ($82\mu$m) are contained for at least a certain rate may be adopted. The characteristics of this pattern are searched at a rotational period of the intermediate belt, and the origin pattern that has the most notable characteristics and that is not seen in other regions is confirmed. In Step S303, the lattice counter counts up.

Subsequently, in Step S304, it is determined whether the variation of the pitch error index value is not less than +3%. When the variation of the pitch error index value is not less than +3%, in Step S305, the upper counter counts up. On the other hand, when the variation of the pitch error index value is not more than +3%, the flow proceeds to Step S306. In Step S306, it is determined whether the variation of the pitch error index value is not more than -3% (whether an absolute value of the variation is not less than 3%). When the variation of the pitch error index value is not more than -3%, in Step S307, the lower counter counts up. On the other hand, when the variation of the pitch error index value is more than -3% (the absolute value of the variation is less than 3%), in Step S308, both the upper counter and the lower counter are reset to zero and the flow returns to Step S302.

In Step S309, it is determined whether both the upper counter and the lower counter are greater than 5. In the embodiment, referring the counter, it is determined whether the characteristic extraction is performed. When at least one of these counters is not greater than 5, the flow returns to Step S302. On the other hand, both these counters are greater than 5, i.e. the characteristic extraction has been performed, in Step S310, the characteristic extraction pattern of the optimum position is selected so as to store the pattern as the characteristics of the origin pattern in the memory. Subsequently, in Step S311, it is determined whether the mark for one cycle of the belt is detected. When the mark for one cycle of the belt is not detected, the flow returns to Step S302. On the other hand, when the mark for one cycle of the belt is detected, in Step S312, the lattice counter is reset to zero and the origin characteristic extraction process is finished.

A method of selecting the characteristic extraction pattern may refer to any one of a magnitude of the pitch error, a repeat count of the same value of the pitch, a difference value of the pitch error, and the like. After the process of determining the initial value of the origin pattern is completed, similarly to Embodiment 1, the origin pattern is detected once for one drive cycle of the intermediate belt so as to output the signal to the external portion.

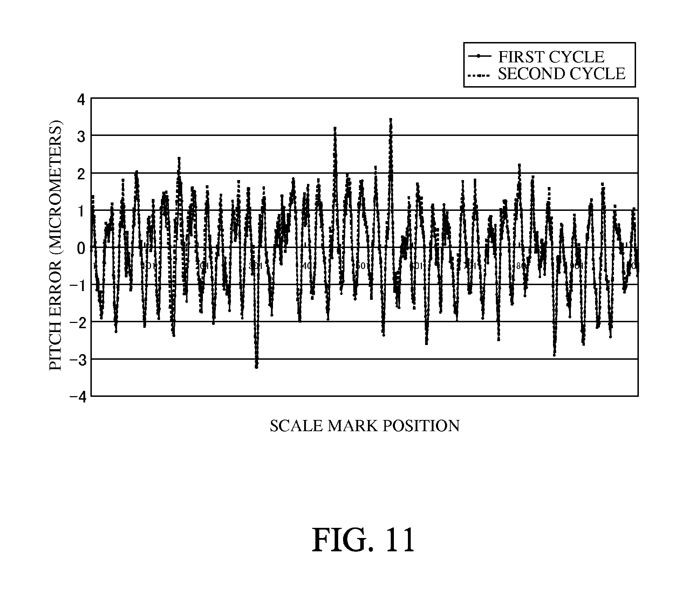

FIG. 11 is a graph that is obtained by monitoring the mark pitch error and extracting the characteristic pattern at an arbitrary position in a first cycle to obtain a waveform correlation with a signal in a second cycle and overlaps the two waveforms in which the correlation coefficient is maximized. The waveform in the first cycle is depicted by a solid line, and the waveform in the second cycle is depicted by a dotted line. When the error is varied within around $3\mu\text{m}$, as illustrated in FIG. 11, the waveforms are substantially coincident with each other. In other words, if the state such as the tension applied to the supporting member, the dust, or the scratch, due to the environmental change or the change with the passage of time, is not significantly changed, the origin mark can be reproducibly detected. When the correlativity is deteriorated by the environmental change, the change with the passage of time, or the like, the origin mark pattern can be set again in accordance with the current situation so as to prevent the failure of the origin detection. The method of extracting arbitrary waveform characteristics of the present embodiment does not require the origin pattern to be previously incorporated inside the supporting member, which can be applied to a common supporting member which contains the variation that is not less than a predetermined level of the manufacturing error.

The present embodiment can automatically perform the characteristic extraction of the origin when a supporting member manufactured at low cost having a large amount of pitch error is used or a lot of long supporting members are used and each of the supporting members needs to perform the origin detection as a machine tool or a transfer apparatus. In other words, since the origin pattern does not need to be previously incorporated and the origin is provided at an arbitrary position, the origin position can also be finely adjusted later. Furthermore, a plurality of characteristic patterns can be set to specify a plurality of positions. In addition, an absolute encoder can also be configured by making the state in which detected patterns are not overlapped in a whole of the use range, for example making the error pattern so as to correspond to M-sequence. Also in the present embodiment, an origin detecting system which is not easily influenced by the dust, the scratch, or the dirt can be configured.

According to each of the embodiments described above, even when the signal amplitude is changed by the alignment of the object to be measured or the dust, the scratch, or the dirt of the surface, a high-accuracy pitch error can be calculated based on the accurate velocity information obtained by using the interval detecting method and the velocity information depending on the mark pitch obtained by using the encoder method. Therefore, an encoder system with high reliability that improves detection accuracy of an origin position can be provided.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

An encoder system (100) includes a supporting member (11) including a plurality of marks, first and second sensors (12, 13) provided to be shifted by a first distance from each other and capable of reading the marks, and a calculation processing unit (14) that performs a calculation processing of detected signals of the first and second sensors, and the calculation processing unit calculates a first time that is required for one mark to move the first distance and a second time that is required for two adjacent marks to pass a detection position of the first or second sensor while the supporting member moves relatively to the first and second sensors, and determines that a mark pattern used to calculate a first index is an origin mark pattern when the first index calculated based on the first and second times corresponds to a second index characterizing an origin position.

**Claims**

1. An encoder system (100) comprising:

   a supporting member (11) including a plurality of marks;
   a first sensor (12) and a second sensor (13) provided so as to be shifted from each other by a first distance in a moving direction of the supporting member and configured to be capable of reading the plurality of marks; and
   a calculation processing unit (14) configured to perform a calculation processing of detected signals of the first sensor and the second sensor, **characterized in that**
   the calculation processing unit calculates a first time that is required for one mark of the plurality of marks to move the first distance and a second time that is required for two adjacent marks of the plurality of marks to pass a detection position of one of the first sensor and the second sensor while the supporting member moves relatively to the first sensor and the second sensor, and the calculation processing unit determines that a mark pattern that is used to calculate a first index is an origin mark pattern when the first index calculated based on the first time and the second time corresponds to a second index that characterizes an origin position.

2. The encoder system according to claim 1, further comprising a storage portion configured to store the origin mark pattern,
   **characterized in that** the origin mark pattern is previously stored in the storage portion as a pattern that is different from a normal mark pattern.

3. The encoder system according to claim 1, further comprising a storage portion configured to store the origin mark pattern,
**characterized in that** the calculation processing unit stores an arbitrary pattern including a pattern different from a normal mark pattern as the origin mark pattern in the storage portion.

4. The encoder system according to claim 2 or 3,
**characterized in that** a mark interval of the origin mark pattern is different from a mark pattern of the normal mark pattern.

5. The encoder system according to any one of claims 1 to 4,
**characterized in that** a total length of the origin mark pattern is an integral multiple of a mark interval of a normal mark pattern.

6. The encoder system according to any one of claims 1 to 5,
**characterized in that** the first index is a ratio of the first time and the second time.

7. The encoder system according to any one of claims 1 to 5,
**characterized in that** the first index is a product of the first distance and a ratio of the first time and the second time.

8. A machine tool comprising the encoder system according to any one of claims 1 to 7.

9. A transfer apparatus comprising the encoder system according to any one of claims 1 to 7.

FIG. 1

FIG. 2

FIG. 3

1500mm

5mm 112

## FIG. 4A

ORIGIN MARK PATTERN RANGE

··· ..85.85.85   8 2. 82. 90. 90 .82. 82. 90. 90 .82. 82. 90. 90   85.85.85   ··························.

## FIG. 4B

ORIGIN MARK PATTERN RANGE

··· ..85.85.85   82. 82. 82. 82. 82. 82. 90. 90. 90. 90. 90. 90   85. 85. 85   ·························.

## FIG. 4C

ORIGIN MARK PATTERN RANGE

··· ..85.85.85   85x2. 85. 85. 85.  85. 85. 85.85x2. 85.85    85. 85. 85···   ·······················.

## FIG. 4D

ORIGIN DETECTION PROCESS

PULSE COUNTER n=0 — S101

PULSE COUNTER n++ — S102

S103 — DOES FIRST SENSOR DETECT MARK? — N → S105 — TIMER VALUE –T1(n)>1? — N

Y

S104 — STORE TIMER VALUE T1(n)

S106 — CALCULATE ADJACENT MARK TRANSIT TIME T1(n)-T1(n-1)

S107 — DOES SECOND SENSOR DETECT MARK? — N → S109 — TIMER VALUE -T2(n)>1? — N

Y

S108 — STORE TIMER VALUE T2(n)

CALCULATE ADJACENT MARK TRANSIT TIME T2(n)-T2(n-1) — S110

CALCULATE SAME MARK TRANSIT TIME T2(n)-T1(n) — S111

CALCULATE ERROR INDEX (T2(n)-T2(n-1))/( T2(n)-T1(n)) STORE index (n) — S112

S113 — ORIGIN INDEX VALUE? — N

Y

S114 — OUTPUT ORIGIN SIGNAL

END OF PROCESS

FIG. 5

MONITOR OF ORIGIN PATTERN

FIG. 6

FIG. 7

FIG. 8

```
        ┌────────────────────────┐
        │    ORIGIN POSITION     │
        │    UPDATE PROCESS      │
        └───────────┬────────────┘
                    │
        ┌───────────▼────────────┐
        │  CALCULATE ADJACENT    │   S201
        │   MARK TRANSIT TIME    │
        └───────────┬────────────┘
                    │
        ┌───────────▼────────────┐
        │  CALCULATE SAME MARK   │   S202
        │     TRANSIT TIME       │
        └───────────┬────────────┘
                    │
        ┌───────────▼────────────┐
        │  CALCULATE PITCH ERROR │   S203
        │        INDEX           │
        │ STORE PULSE COUNTER n++ │
        └───────────┬────────────┘
                    │
              ╱─────▼─────╲
             ╱   PULSE     ╲        S204
        N   ╱  COUNTER >    ╲
        ◄──◄ PREDETERMINED  ►
            ╲    VALUE?    ╱
             ╲           ╱
              ╲────┬────╱
                   │ Y
        ┌──────────▼─────────────┐
        │  LOAD PITCH ERROR INDEX│   S205
        │   AND ORIGIN INDEX     │
        └──────────┬─────────────┘
                   │
        ┌──────────▼─────────────┐
        │ CALCULATE CORRELATION  │   S206
        │     COEFFICIENT        │
        └──────────┬─────────────┘
                   │
              ╱────▼────╲
             ╱ MAXIMUM   ╲         S207
        N   ╱CORRELATION  ╲
        ◄──◄COEFFICIENT >  ►
            ╲ α (CONSTANT)?╱
             ╲           ╱
              ╲────┬────╱
                   │ Y
              ╱────▼────╲
             ╱ MAXIMUM   ╲         S208
            ╱CORRELATION  ╲   N    ┌──────────────────────┐
           ◄ COEFFICIENT > ►──────►│ STORE CURRENT PITCH  │  S210
            ╲α+β (CONSTANT)?╱      │ ERROR INDEX AS ORIGIN│
             ╲           ╱         │       INDEX          │
              ╲────┬────╱          └──────────┬───────────┘
                   │ Y                        │
        ┌──────────▼─────────────┐            │
        │   OUTPUT ORIGIN SIGNAL │  S209       │
        └──────────┬─────────────┘◄───────────┘
                   │
        ┌──────────▼─────────────┐
 S211   │   INITIALIZE PULSE     │
        │       COUNTER          │
        └────────────────────────┘
```

## FIG. 9

FIG. 10

FIG. 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5296797 A
- JP H10318790 B

- JP 2008076284 A